# EUROPÄISCHE PATENTSCHRIFT

(11) **EP 2 831 449 B1**
(45) Veröffentlichungstag und Bekanntmachung des Hinweises auf die Patenterteilung: **30.05.2018**
(21) Anmeldenummer: 13711674.5
(22) Anmeldetag: 22.03.2013
(51) Int. Cl.: F16D 55/226, F16D 65/18, F16D 65/56

(54) **ZUSPANNVORRICHTUNG EINER SCHEIBENBREMSE**
BRAKE APPLICATION DEVICE OF A DISK BRAKE
DISPOSITIF D'APPLICATION D'EFFORT D'UN FREIN À DISQUE

(30) Priorität: 26.03.2012 DE 102012006112
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(86) Internationale Anmeldenummer: PCT/EP2013/056019
(87) Internationale Veröffentlichungsnummer: WO 2013/143988

(56) Entgegenhaltungen:
- EP-A2- 1 160 480
- WO-A1-03/036122
- DE-A1- 3 937 289
- DE-A1- 4 215 200
- DE-B3- 10 242 397
- JP-A- H11 230 214

## Beschreibung

Die Erfindung betrifft eine Zuspannvorrichtung einer Scheibenbremse, insbesondere einer mittels einer Kolbenstange eines pneumatisch oder elektromotorisch betriebenen Bremszylinders betätigbaren Scheibenbremse nach dem Oberbegriff des Anspruchs 1.

Pneumatisch betätigte Scheibenbremsen weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.

In der WO 91/19115 weist die Zuspannvorrichtung einen Drehhebel auf, der an seinem unteren Ende wenigstens einen Exzenteransatz aufweist, der über ein erstes Schwenklager drehbar in Inneren des Bremssattels gelagert ist und der über eine Stützwalze an einer Traverse abgestützt ist, in welche die Nachstellspindeln eingeschraubt sind, die über Druckstücke auf den aktionsseitigen Bremsbelag einwirken können, um diesen bei Bremsungen in Richtung der Bremsscheibe zu verschieben. Diese bekannte pneumatisch betätigte Scheibenbremse weist zudem eine automatische Nachstellvorrichtung auf, um den Belag- und Scheibenverschleiß auszugleichen.

Nach der WO 91/19115 wirkt die Nachstellvorrichtung drehend entweder auf die Mutter (die in dieser Schrift als die Traverse ausgebildet ist) oder die Spindel einer Mutter-/Spindelanordnung, um durch eine Relativverschraubung zwischen Mutter und Schaube die Länge der Mutter-/Spindelanordnung zu verändern, wodurch die Gesamtlänge der Zuspannvorrichtung zwischen dem Bremsbelag und dem Widerlager der Zuspannvorrichtung am Inneren des Bremssattels vergrößert wird, wodurch wiederum der zunehmende Belagverschleiß ausgeglichen wird.

Die automatische Nachstellvorrichtung wird mittelbar oder unmittelbar von einem Spreiz- oder Betätigungsmechanismus angetrieben. So ist es aus dem genannten Stand der Technik bekannt, den Drehhebel der Zuspannvorrichtung über einen Antriebsstift mit einem Getriebeelement der Nachstellvorrichtung zu koppeln, so dass bei einem Zuspannen der Bremse, bei welchem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel der Mutter-/Spindelanordnung gekoppelt ist.

In der WO 91/19115 sind zwei drehfest gekoppelte Mutter-Spindelanordnungen vorgesehen, die über ein Synchronisationsgetriebe - ein Umschlingungsgetriebe wie eine Kette oder einen Zahnriemen - drehfest gekoppelt sind, wobei nur in einer dieser Anordnungen eine Nachstellvorrichtung bzw. ein Nachstellantrieb angeordnet ist. Das Synchronisationsgetriebe ist zwischen dem Exzenteransatz des Drehhebels und der Traverse angeordnet.

Die US RE38,874E zeigt darüber hinaus die auch in Fig. 10 dieser Anmeldung abgebildete Schiebesattel-Scheibenbremse, bei welcher die Anordnung von Drehhebel und Stützwalze im Vergleich zum eingangs genannten Stand der Technik "umgedreht" worden ist, d.h., die Stützwalze oder eine stützwalzenartige Kontur ist drehfest an der Innenseite des Bremssattels angeordnet oder ausgebildet und auf der Stützwalze ist der untere Exzenteransatz des Drehhebels drehbar gelagert, welcher an seiner von der Stützwalze angewandten Seite über ein Schwenklager auf eine Traverse einwirkt, in welche die beiden über das Synchronisationsgetriebe - hier eine Kegelradanordnung - gekoppelten Stellspindeln mit den Druckstücken eingeschraubt sind.

Eine gattungsgemäße Zuspannvorrichtung ist aus der DE 39 37 289 A1 bekannt.

Die vorstehend beschriebenen Zuspannvorrichtungen der gattungsgemäßen Scheibenbremse des Standes der Technik haben sich an sich bewährt, sollen aber hinsichtlich ihres konstruktiven Aufbaus und ihres Betriebsverhaltens weiter optimiert werden.

Die Lösung dieser Aufgabe ist das Ziel der Erfindung.

Die Erfindung löst diese Aufgabe durch den Gegenstand des Anspruchs 1 und des Anspruchs 9.

Nach dem Gegenstand des Anspruchs 1 wird die Anordnung und Ausgestaltung des Synchronisationsgetriebes in einfacher Weise optimiert.

Nach dem Kennzeichen des Anspruchs 1 sind zwischen dem Drehhebel und der Traverse wenigstens einer, zwei oder mehr Lagerböcke ausgebildet und es greift wenigstens eines der Getriebeelemente in eine Aussparung des Lagerbockes ein und an dem Lagerbockelement ist ein Zentrier- und Lageransatz ausgebildet ist, auf welchem wenigstens eines der Zahnräder drehbar ausgebildet ist.

Aus der WO 91/19115 ist es zwar auch an sich bekannt, ein Umschlingungsgetriebe vorzusehen, diese umfasst aber den Bereich zwischen Drehhebel und Traverse und ist daher nur unzureichend geschützt.

Nach der Erfindung liegen dagegen direkt Zahnräder oder dgl. zwischen der Traverse und dem Drehhebel, was vorteilhaft möglich wird, dass diese Getriebeelementes in Ausnehmungen von einem oder mehreren Lagerböcken an der Traverse eingreifen, die ebenfalls zwischen der Traverse und dem Drehhebel angeordnet sind. Derart sind die Getriebeelemente nicht im Kraftfluss zwischen der Traverse und dem Drehhebel angeordnet, können aber in Zuspannrichtung direkt in den Raum zwischen diesen Elementen eingesetzt werden.

Vorteilhafte Ausgestaltungen der Erfindung sind den Unteransprüchen zu entnehmen.

Nachfolgend wird die Erfindung anhand von Ausführungsbeispielen unter Bezug auf die Zeichnung näher beschrieben. Es zeigt:
- Fig. 1: einen Schnitt durch einen Bereich eines Bremssattels und einer Zuspannvorrichtung einer erfindungsgemäßen Scheibenbremse;
- Fig. 2: eine Sprengansicht von Elementen der Zuspannvorrichtung aus Fig. 1;
- Fig. 3a: eine perspektivische Ansicht einer Baugruppe der Zuspannvorrichtung aus Fig. 1 und 2;
- Fig. 3b: eine perspektivische Ansicht einer Druckstempelanordnung der Zuspannvorrichtung aus Fig. 1;
- Fig. 4: einen Schnitt durch eine Variante einer Hebelbaugruppe für eine Zuspannvorrichtung ähnlich zur Fig. 1;
- Fig. 5: eine perspektivische Ansicht eines Lagerbockes aus Fig. 4;
- Fig. 6: verschiedene Ansichten der Lagerböcke der Zuspannvorrichtung aus Fig. 1;
- Fig. 7: eine perspektivische Ansicht eines Synchronisationsgetriebes der Zuspannvorrichtung aus Fig. 1;
- Fig. 8: eine Ansicht des an einer Traverse mit einer Nachstellvorrichtung und Druckstempeln angeordneten Synchronisationsgetriebes;
- Fig. 9: eine weitere perspektivische Ansicht eines Teils der Zuspannvorrichtung aus Fig. 1;
- Fig. 10a: eine perspektivische Ansicht einer Drehhebelbaugruppe der Zuspannvorrichtung aus Fig. 9;
- Fig. 10b: eine perspektivische Ansicht eines Antriebsblechs für den Drehhebel aus Fig. 10a; und
- Fig. 11a: eine Schnittansicht einer zweiten Hebelbaugruppe für eine Zuspannvorrichtung;
- Fig. 11b: eine Ausschnittsvergrößerung aus Fig. 11a; und

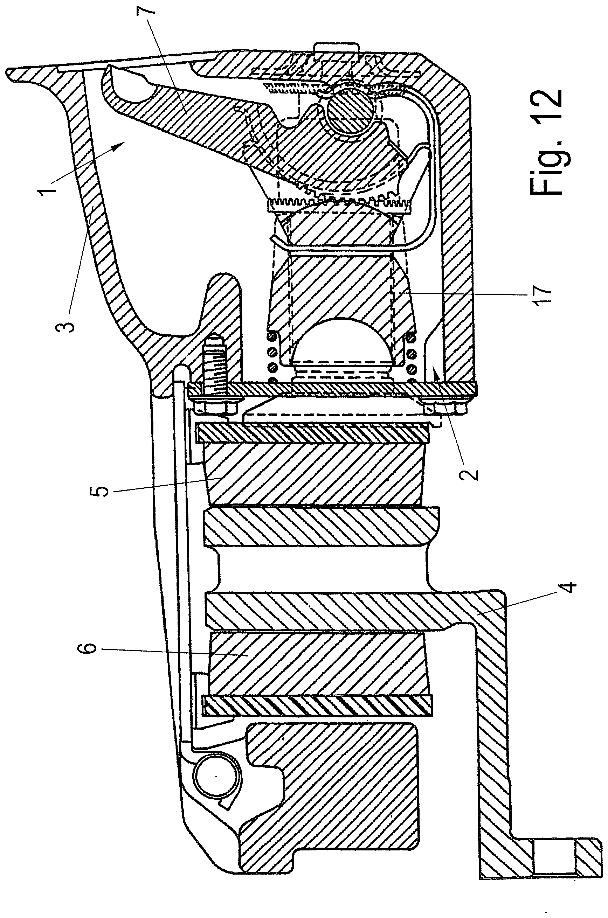

- Fig. 12: einen Schnitt durch eine bekannte Scheibenbremse.

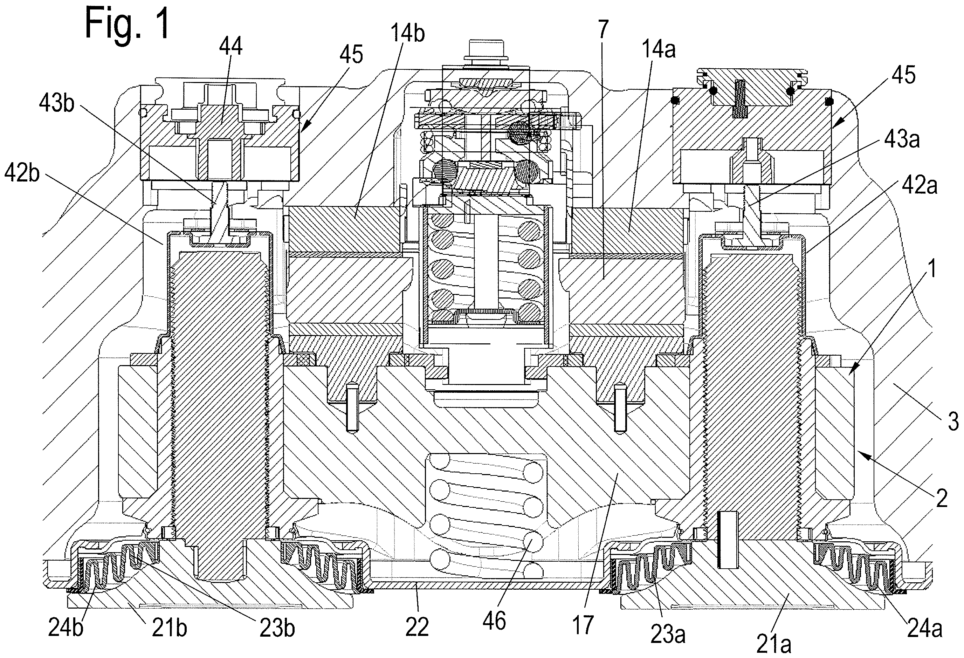

Fig. 1 zeigt einen Schnitt durch einen Abschnitt einer eine Zuspannvorrichtung 1 aufnehmenden Öffnung 2 eines Bremssattels 3 einer von einem (hier nicht dargestellten) Aktuatorelement betätigbaren Scheibenbremse. Bei dem Aktuatorelement handelt es sich vorzugsweise um eine Kolbenstange eines pneumatisch oder elektromotorisch oder federbetätigten Bremszylinders (hier nicht dargestellt).

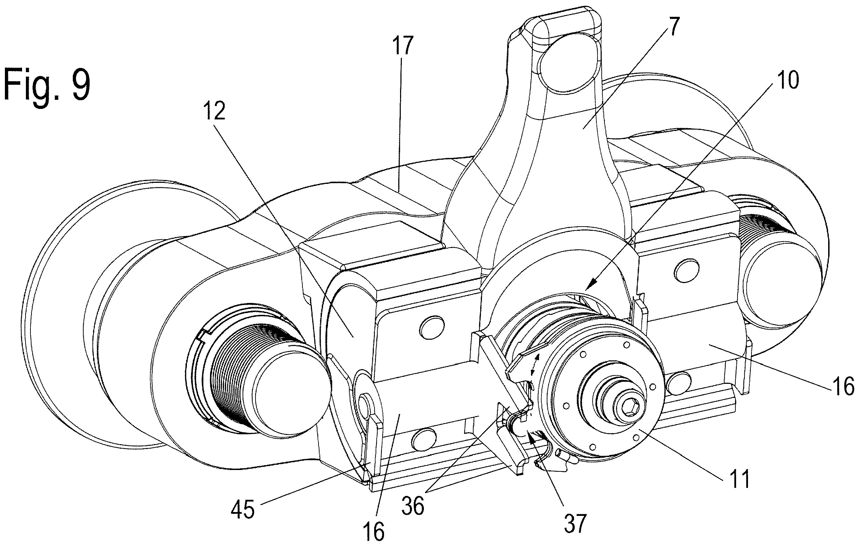

Der ein- oder mehrteilige Bremssattel 3 ist vorzugsweise als ein Schiebesattel ausgebildet, der an einem (hier nicht dargestellten) Bremsträger - beispielsweise an Lagerbolzen - verschiebbar geführt ist. Der Bremssattel 3 umgreift - beispielsweise nach Art des Standes der Technik der Fig. 9 - rahmenartig einen Randabschnitt einer Bremsscheibe 4. Beidseits der Bremsscheibe 4 sind Bremsbeläge 5, 6 angeordnet. Bei Bremsungen wird mit der Zuspannvorrichtung 1 der zuspannseitige Bremsbelag 5 direkt gegen die Bremsscheibe 4 gepresst, wohingegen der reaktionsseitige Bremsbelag 6 mit dem verschieblichen Bremssattel 3 gegen die Bremsscheibe 4 gezogen wird.

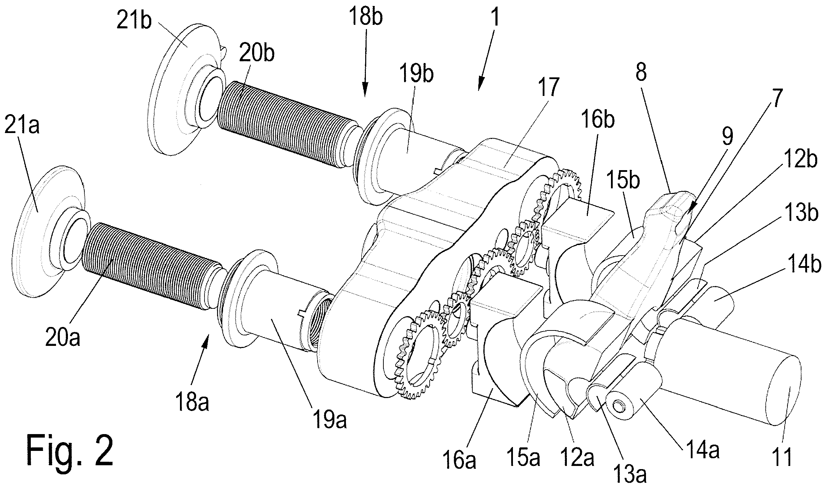

Zur Realisierung einer Exzenterbetätigung weist die Zuspannvorrichtung 1 (siehe jetzt die beispielhafte bevorzugte Ausführung der Fig. 1 und 2) einen schwenkbaren Drehhebel 7 auf, der an seinem einen Ende 8 eine Ausnehmung 9 für den Eingriff der Kolbenstange aufweist. An seinem anderen Ende weist er hier mittig eine Ausnehmung 10 zum Übergreifen einer im Wesentlichen zylindrisch ausgestalteten Baueinheit auf, die eine Nachstellvorrichtung 11 ausbildet.

Der Drehhebel 7 weist ferner hier beidseits der Ausnehmung 10 für die Nachstellvorrichtung 11 zwei Exzenteransätze 12a, b auf, die sich jeweils über ein Schwenklager 13a, b an jeweils einem Stützstift 14a, b abstützen, welche an der Innenseite des Bremssattels 3 abgestützt sind. An der von den Stützstiften 14a, b abgewandten Seiten ist der Drehhebel 7 an seinen Exzenterabschnitten 12a, b über jeweils ein weiteres Schwenklager 15a, b an jeweils einem vorzugsweise einstückigen Lagerbock(element) 16a, b abgestützt, die wiederum an einer Traverse 17 (die quer zur Bremsscheibe ausgerichtet ist) abgestützt sind, die von einem oder hier zwei Zuspannstempeln 18a, b durchsetzt ist, so dass die Traverse hier zwischen diesen zwei Zuspannstempeln 18a, b auch eine Brücke bildet. Die Schwenklager 13, 15 können als Gleit- oder Wälzlager ausgebildet sein.

Die Zuspannstempel weisen hier jeweils eine Gewindehülse 19a, b, einen Gewindestempel 20a, b und jeweils wenigstens ein an den Gewindestempeln 19a, b angeordnetes Druckstück 21a, b auf (Fig. 1, 2). Diese Anordnung ist bevorzugt, da die zwei Zuspannstempel 18a, b eine gleichmäßige Kraftverteilung beim Zuspannen und einen weitestgehend gleichmäßigen Verschleiß insbesondere des zuspannseitigen Bremsbelages 5 sicherstellen. Die Erfindung ist aber nicht auf diese Variante beschränkt.

An ihrer zur Bremsscheibe 4 gewandten Seite ist die Öffnung 2 von einer Verschlußplatte 22 verschlossen, die Öffnungen 23a, b aufweist, welche von den Gewindestempeln 20a, b durchsetzt ist, wobei die Spalte zwischen den Gewindestempeln 20a, b und der Verschlußplatte 22 von Dichtungsanordnungen 24a, b abgedichtet sind (Fig. 1).

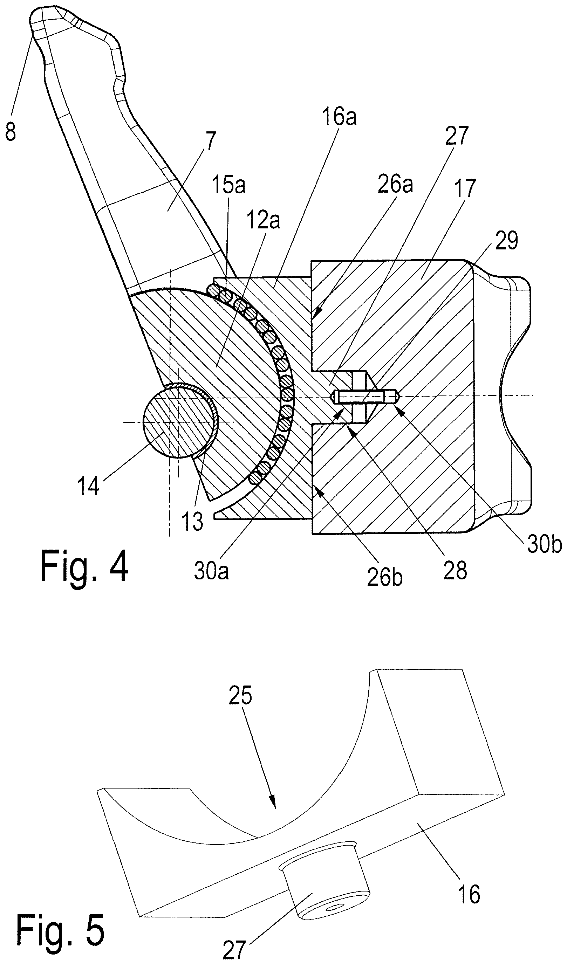

Fig. 4 veranschaulicht, dass die Lagerböcke 16a, b jeweils an ihren zu den Exzenterabschnitten 12a, b des Drehhebels 7 gewandten Seiten eine hier teilzylindrische Ausnehmung 25 aufweisen, in welche jeweils eines der Schwenklager (hier) 15a und einer der Exzenteransätze (hier) 12a eingreift.

An ihrer zur Traverse 17 gewandten Seite stützen sich die Lagerbockelemente 16a, b jeweils in einem oder mehreren Kontaktbereichen 26 an der Traverse 17 ab.

Vorzugsweise greifen die Lagerbockelemente 16a, b und die Traverse 17 ferner zur Sicherstellung eines korrekten Sitzes an der Traverse 17 formschlüssig ineinander.

Hier ist vorteilhaft und konstruktiv einfach vorgesehen, dass die Lagerbockelemente 16a, b mit jeweils wenigstens einem Zentrieransatz 27 in eine korrespondierende Ausnehmung 28 in der Traverse 17 eingreifen, wobei noch ein Zentrierstift 29 in Sacklöcher 30 in dem Zentrieransatz 27 und im Grund der Ausnehmung 28 eingreifen kann, welcher jeweils den Sitz des Lagerbockes 16 an der Traverse 17 weiter optimiert. Dies ist besonders gut in Fig. 4 zu erkennen.

Diese vorteilhafte Ausgestaltung von Drehhebel 7, Lager 15 und wenigstens einem Lagerbockelement 16 ist bei Zuspannvorrichtungen verschiedener Art realisierbar.

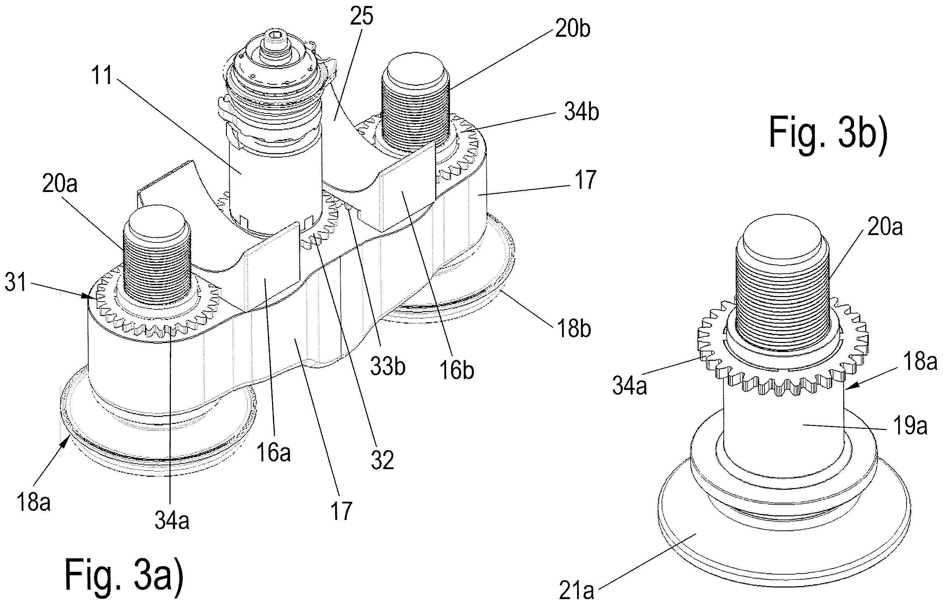

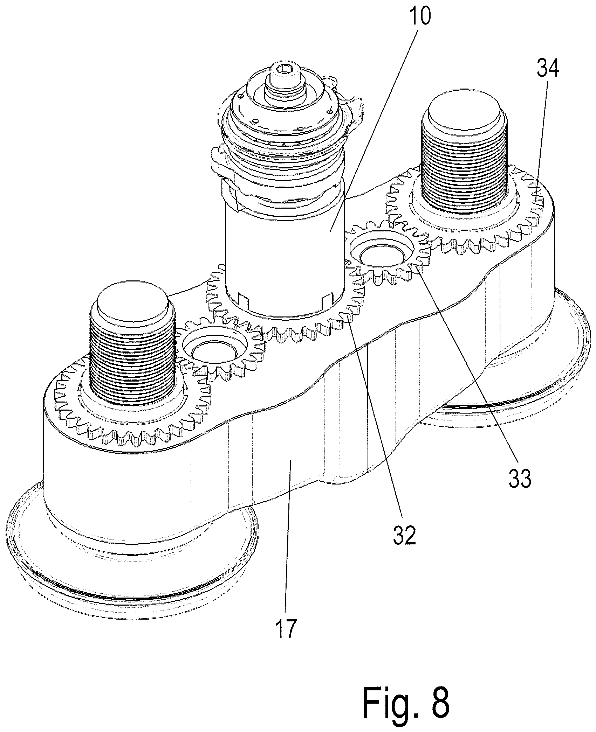

Nach der Ausgestaltung der Fig. 3 sowie 6 bis 8 wird sie von einer besonders vorteilhaften Getriebeanordnung 31 zum synchronen Antrieb der Druckstempel 19 ergänzt.

Diese Getriebeanordnung 31 weist hier (Fig. 3, 6, 7, 8) eine Anordnung von miteinander kämmenden, in einer Ebene liegenden Zahnrädern 32, 33a, b, 34 a, b auf, die an der zum Drehhebel 12 weisenden Seite der Traverse 17 zwischen der Traverse 17 und dem Drehhebel 12 angeordnet sind.

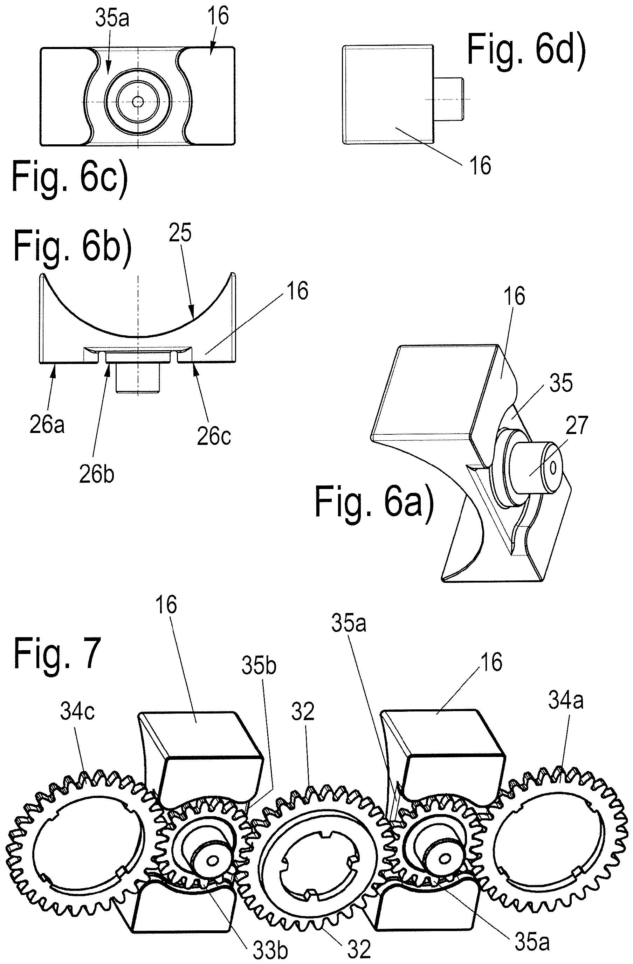

Nach Fig. 7 ist vorgesehen, dass die Lagerböcke 16a, b diese Zahnräder 32 -34 teilweise übergreifen, so dass die Zahnräder unmittelbar an der Traverse 17 angeordnet sein können.

Einzelne der Zahnräder 32 - 34 greifen jeweils in eine Aussparung 35a, b an den von den Lagerböcken 16a, b gewandten Seiten der Lagerböcke 16a, b ein, so dass die Lageböcke 16 nur seitlich oder seitlich und mittig der Zahnräder 33 an der Traverse 17 abgestützt sind.

Derart wird das Synchronisationsgetriebe 31 besonders geschützt zentral in der Zuspannvorrichtung 1 angeordnet, was auch den Vorteil mit sich bringt, dass die Zuspannstempel 18 axial relativ kurz gestaltet werden können.

Das mittlere Zahnrad 32 ist hier das Abtriebszahnrad der Nachstellvorrichtung 10, welches Nachstelldrehbewegungen der Nachstellvorrichtung 10 über die mittleren Zahnräder 33a, b die von den Lagerböcken 16,a,b übergriffen werden, auf Antriebszahnräder 34a, b übertragen, die drehfest auf die Gewindehülsen 19 der Druckstempel 18 aufgesetzt sind. Die Zahnräder 33 sind hier auf den Zentrieransätzen 27drehbar gelagert.

Bei Drehungen des Antriebszahnrades 32 werden die beiden Gewindehülsen 19 gedreht, so dass die (z.B. an den Bremsbelägen) drehfest gehaltenen Gewindestempel 20 axial bewegt werden, um Belagverschleiß auszugleichen.

Die Getriebeanordnung 31 zur Synchronisation und/oder zum Antrieb der wenigstens einen Gewindehülse 19a, b oder des wenigstens einen Gewindestempels 20a, b ist derart besonders sicher geschützt sowie platzsparend in die Zuspannvorrichtung 1 integriert.

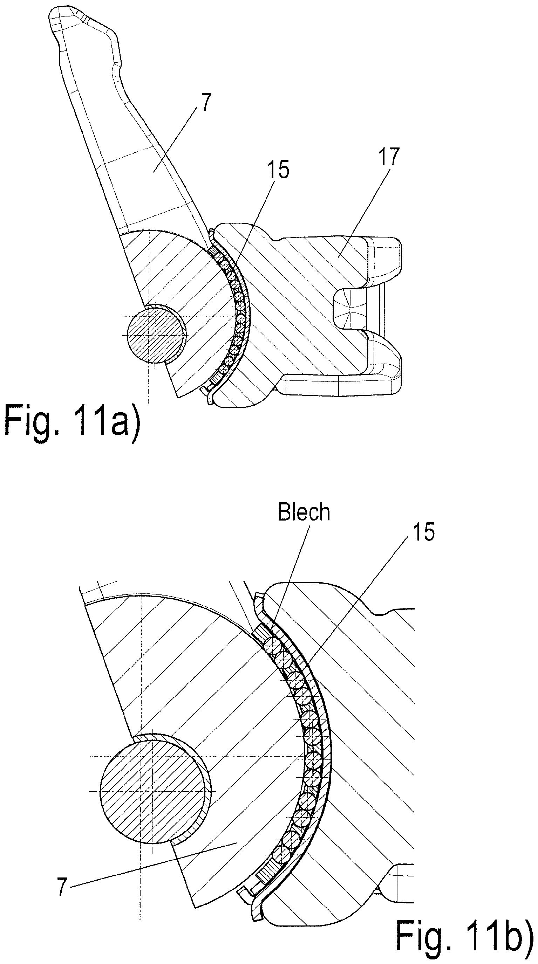

Ein besonderer Vorteil der eine separate Erfindung darstellenden, die Getriebeanordnung 31 aber auch sehr sinnvoll und vorteilhaft ergänzenden Lagerböcke 16a, b zum Abstützen des Drehhebels 7 nebst seines Schwenklagers 15 an der Traverse 17 - beispielsweise im Vergleich zu einem Abstützen über ein gehärtetes Lagerblech in der Traverse (siehe den Stand der Technik der Fig. 11) - liegt darin, dass die Herstellung der Traverse 17 durch die Lagerböcke deutlich vereinfacht werden kann. So muss sie in dem dargestellten Ausführungsbeispiel lediglich eine ebene Anlagefläche für die Kontaktbereiche 26 und einige Bohrungen (28, 30) aufweisen, um die Zentrier- und Lageransätze 27 der Lagerböcke 16 aufzunehmen. Die Auflageflächen 26a, b, c an den Lagerböcken 16 sind in Fig. 6 besonders gut zu erkennen.

Der Zentrieransatz 27 weist vorzugsweise Bereiche verschiedenen Durchmessers auf, von denen einer als Achse für das Zahnrad 33 dient, wobei eine Axialfläche als eine der Kontaktflächen 26b der Lagerböcke 16a, b an der Traverse 17 dient.

Ein besonderer Vorteil der Lagerböcke 16 besteht ferner darin, dass sie es möglich machen, unterschiedliche Materialien oder jedenfalls unterschiedlich bearbeitete Materialien (Guss, spannende Bearbeitung, Schieden usw.) für die Lagerböcke 16 und die eigentliche "reduzierte" Traverse 17 zu verwenden, so dass sie jeweils an ihre Aufgabe optimal angepasst werden können.

Die Lagerböcke 16 sind dabei in angepasster Ausgestaltung auch bei Bremsen einsetzbar, an welche sich der Drehhebel über eine Stützwalze oder Stützstifte nicht am Bremssattel sondern an der Traverse abstützt, wobei dann die größeren Exzenteransätze am Inneren des Bremssattels abgestützt sind (hier nicht dargestellt).

Der Vollständigkeit halber zu erwähnen ist, dass die Gewindehülsen 19a, b hier an ihrem von den Druckstücken abgewandten Enden je drehfest mit einem Blechtopf 42 verbunden sind, der sie vorzugsweise zentriert und an der Traverse 17 hält. An den Blechtöpfen sind an abgedichtet verschließbaren Sattelöffnungen 45 vorzugsweise über Drehmomentübertragungselemente 43 in verschiedener Weise vorteilhaft weitere Funktionen wie ein Rückdrehen an einem bei einem zu großen Drehmoment abscherbaren Rückstelladapter 44 oder eine Sensierung der Nachstelldrehungen oder dgl. realisierbar.

Nachfolgend sei die vorteilhafte Kopplung zwischen der Nachstellvorrichtung 11 und den Zuspannstempeln 20 näher betrachtet.

Die Nachstellvorrichtung 10 dient dazu, bei Bremsungen den Verschleiß der Bremsscheibe 4 und der Bremsbeläge 5, 6 auszugleichen, indem die Länge der Zuspannstempel vergrößert wird.

Hierzu wird bei Bremsungen über eine Antriebsgetriebeverbindung - hier eine Antriebsgabel aus Antriebsfingern 36 am Drehhebel 7 (siehe Fig. 9, 10, 11), in die eine Antriebsgabel 37 der Nachstellvorrichtung 10 zahnähnlich eingreift - über Getriebeelemente der Nachstellvorrichtung 10 (die typischerweise einen Freilauf und eine Einwegdrehkupplung umfassen) im Falle eines zu großen Lüftspiels ggf. eine Nachstelldrehbewegung des Antriebsrades 32 zugelassen bzw. erzeugt, welche über die Zahnräder 33a,b; 34a,b hier die Gewindehülsen 19a, b antreibt (wobei es auch denkbar wäre, derart die Gewindespindeln 20a, b anzutreiben, wenn die Gewindespindeln 20 beispielsweise direkt in Innengewinde der Traverse 17 eingreifen würden; hier nicht dargestellt).

Werden die in der Traverse 17 axial ortsfest angeordneten aber drehbaren Gewindehülsen 19a, b verdreht, verlängert sich die Gesamtlänge der Zuspannstempel 18a, b, da die Gewindestempel 19 unverdrehbar aber axial beweglich gehalten sind (z.B. an den Bremsbelägen).

Nach einem besonders vorteilhaften Aspekt der Erfindung ist das Antriebs- und/oder Synchronisationsgetriebe zwischen dem Drehhebel 7 und der Traverse 17 angeordnet.

Eine solche Anordnung ist zwar prinzipiell auch aus der eingangs erwähnten WO 91/19115 bekannt. Allerdings ist das Synchronisationsgetriebe dort als Umschlingungsgetriebe mit einem Zahnriemen ausgebildet, so dass es nicht so kompakt und geschützt, wie die Zahnradanordnung der Fig. 7 zwischen der Traverse 17 und dem Drehhebel unterbringbar ist. Alternativen zur Zahnradanordnung könnten Kegelrad- oder Kronenradgetriebe sein, die zwischen dem Drehhebel 12 und der Traverse 17 angeordnet würden.

Nachfolgend sei die vorteilhafte Kopplung zwischen dem Drehhebel 7 und der Nachstellvorrichtung 11 näher betrachtet.

Nach der WO 91/19115 A wird der Drehhebel zur Ausbildung des Antriebsstiftes zum Antrieb der Antriebsgabel an der Nachstellvorrichtung im Schmiedeprozess an dem Drehhebel ausgebildet. Dies erfordert einen hohen Präzisionsaufwand, denn die Geometrie des Antriebsstiftes beeinflusst stark das Nachstellverhalten. Zusätzlich wird nach dem Stand der Technik an dem Drehhebel auch ein Blechteil angebracht, welches die Funktionen einer Käfigrückführung für ein Nadellager und die Positionierung des Zylinderstiftes übernimmt.

Nach einem weiteren erfinderischen Aspekt wird der Herstellprozess des Drehhebels dadurch deutlich vereinfacht und es wird die Präzision des Antriebselementes dadurch optimierbar, dass an dem Drehhebel ein Bauteil, insbesondere ein Antriebsblech 39 ausgebildet wird, welches die Funktion des Antriebselementes zum Koppeln des Drehhebels 7 mit der Nachstellvorrichtung 11 übernimmt.

Beispielsweise können durch Stanzen und Biegen einer, zwei oder mehr der Antriebsfinger 36 an dem Antriebsblech 39 ausgebildet werden, welche in eine Antriebsgabel 37 der Nachstellvorrichtung 11 eingreifen.

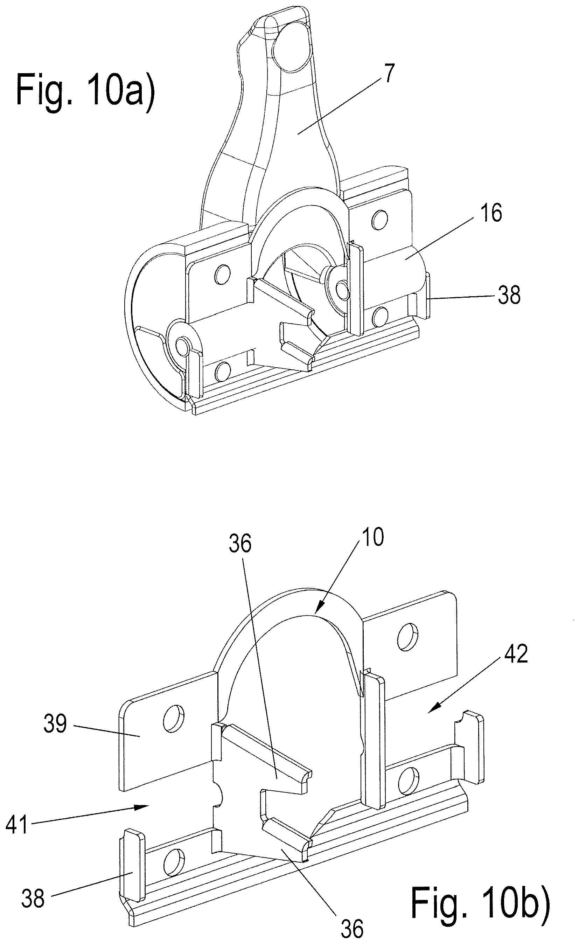

Bei dem Antriebsblech 39 kann es sich um ein zusätzliches Blech handeln, das lediglich diese Antriebsfunktion realisiert oder aber der eine oder die mehreren Antriebsfinger 36 bzw. allgemeiner die Funktion des Antriebs des Nachstellers 11 werden in ein bestehendes Blech wie das weiter oben erläuterte Blech zur Käfigrückführung integriert. Eine derartige Ausgestaltung zeigt Fig. 10.

Der oder die Antriebsfinger 36 können auch eine Art Zahnsegment ausbilden, eine Art Gabel, eine Art Kronenrad oder aber eine Art Kegelrad.

Nach Fig. 10 deckt ein einziges - hier allein durch Stanzen und umformendes Biegen hergestelltes - Antriebsblech 39 nahezu die gesamte zum Bremssattel gewandte, hier weitgehend ebene Seite des Drehhebels 12 bis auf die Ausnehmungen 10, 40, 41 für die Nachstellvorrichtung 10 und die Stützstifte 14a, b ab. Laschen 38 an dem Blech können für die Käfigrückführung oder dgl. genutzt werden.

Zu erwähnen ist noch, dass eine Rückstellfeder 46 zwischen der Platte 22 und der Traverse 17 zum Zurückschieben der Traverse 17 nach einer Bremsung dient.

### Bezugszeichen

- Zuspannvorrichtung: 1
- Öffnung: 2
- Bremssattel: 3
- Bremsscheibe: 4
- Bremsbeläge: 5, 6
- Drehhebel: 7
- Ende: 8
- Ausnehmung: 9
- Ausnehmung: 10
- Nachstellvorrichtung: 11
- Exzenteransätze: 12a, b
- Schwenklager: 13a, b
- Stützstifte: 14a, b
- Schwenklager: 15a, b
- Lagerböcke: 16a, b
- Traverse: 17
- Zuspannstempel: 18a, b
- Gewindehülsen: 19a, b
- Gewindestempel: 20a, b
- Druckstücke: 21a, b
- Verschlußplatte: 22
- Öffnungen: 23a, b
- Dichtungsanordnungen: 24a, b
- Ausnehmung: 25
- Kontaktbereiche: 26a, b, c
- Zentrieransatz: 27
- Ausnehmung: 28
- Zentrierstift: 29
- Sacklöcher: 30a, b
- Getriebeanordnung: 31
- Zahnräder: 32, 33a, b, 34 a, b
- Aussparung: 35a, b
- Antriebsfinger: 36
- Antriebsgabel: 37
- Laschen: 38
- Antriebsblech: 39
- Ausnehmungen: 40,41
- Blechtopf: 42
- Drehmomentübertragungselemente: 43
- Rückstelladapter: 44
- Sattelöffnungen: 45
- Rückstellfeder: 46

## Patentansprüche

1. Zuspannvorrichtung einer Scheibenbremse mit einem Bremssattel, insbesondere Zuspannvorrichtung nach einem der vorstehenden Ansprüche, die zumindest folgendes aufweist:
a) einen Drehhebel (7) mit einem oder mehreren Exzenterabschnitten (12a, b);
b) eine Traverse (12), auf welche der Drehhebel (7) vorzugsweise über wenigstens ein Zwischenelement einwirkt; und
c) wenigstens zwei an der Traverse (17) angeordnete oder ausgebildete Zuspannstempel (18a, b);
d) eine Nachstellvorrichtung (11) zum Ausgleich von Belag- und Scheibenverschleiß;
e) eine Getriebeanordnung (31) zum Übertragen der Drehbewegungen der Nachstellvorrichtung (10) auf Getriebeelemente der Zuspannstempel (18) und/oder zur Synchronisation der Drehbewegungen von Elementen der Zuspannstempel (18);
f) wobei wenigstens eines oder mehrere Getriebeelemente (32, 33a, b, 34a, b) der Getriebeanordnung (31) zwischen dem Drehhebel (7) und der Traverse (17) angeordnet ist/sind, wobei diese(s) Getriebeelemente als miteinander kämmende Zahnräder ausgebildet sind,
**dadurch gekennzeichnet, dass**
g) zwischen dem Drehhebel (7) und der Traverse (17) wenigstens einer, zwei oder mehr Lagerböcke (16a, b) ausgebildet ist/sind und dass wenigstens eines der Getriebeelemente in eine Aussparung (35) des Lagerbockes (16) eingreift, und
h) an dem Lagerbockelement (16) ein Zentrier- und Lageransatz (27) ausgebildet ist, auf welchem wenigstens eines der Zahnräder (33) drehbar ausgebildet ist.

2. Zuspannvorrichtung nach Anspruch 1, **dadurch gekennzeichnet, dass** die gesamte Getriebeanordnung (31) zwischen dem Drehhebel (7) und der Traverse (17) angeordnet ist.

3. Zuspannvorrichtung nach Anspruch 1 oder 2, **dadurch gekennzeichnet, dass** die Zahnräder (32; 33a, b; 34a,b) ein mittleres Abtriebszahnrad (32) des Nachstellers (11) umfassen und Antriebszahnräder (34a, b) für Gewindehülsen (19a, b) oder Gewindestempel (20a, b) der Druckstempel.

4. Zuspannvorrichtung nach Anspruch 3,**dadurch gekennzeichnet, dass** die Zahnräder (32; 33a, b; 34a,b) ferner zwischen das Abtriebszahnrad (32) und Antriebszahnräder (34a, b) für die Gewindehülsen (19a, b) oder die Gewindestempel (20a, b) geschaltete Zahnräder (33) umfassen.

5. Zuspannvorrichtung nach einem der vorstehenden Ansprüche, **dadurch gekennzeichnet, dass** das wenigstens eine Lagerbockelement (16a, b) separat zur Traverse (17) ausgebildet ist.

6. Zuspannvorrichtung nach einem der vorstehenden Ansprüche, **dadurch gekennzeichnet, dass** die Lagerböcke (16a, b) an ihrer zum Drehhebel (7) weisenden Seite eine vorzugsweise teilzylindrische Ausnehmung (25) aufweisen, in welche das Schwenklager (13, 15), insbesondere ausgebildet als ein Wälzlager oder ein Gleitlager, eingreift.

7. Zuspannvorrichtung nach Anspruch 6, **dadurch gekennzeichnet, dass** in die Ausnehmung (25) ferner der Exzenteransatz (12) des Drehhebels (17) oder wenigstens ein Stützstift (14) eingreift.

8. Zuspannvorrichtung nach einem der vorstehenden Ansprüche, **dadurch gekennzeichnet, dass** das wenigstens eine Lagerbockelement (16) und die Traverse formschlüssig ineinander greifen.

9. Scheibenbremse mit einer Zuspannvorrichtung nach einem oder mehreren der vorstehenden Ansprüche.

## Claims

1. Brake application device for a disc brake having a brake calliper, in particular an application device according to any of the preceding claims, with at least the following:
a) a rotary lever (7) with one or more eccentric sections (12a, b);
b) a cross-piece (12) upon which the rotary lever (7) acts, preferably by way of at least one intermediate element; and
c) at least two application rams (18a, b) arranged or formed on the cross-piece (17);
d) an adjusting device (11) for the compensation of lining and disc wear;
e) a gear arrangement (31) for transmitting the rotary movements of the adjusting device (10) to gear elements of the application rams (18) and/or for synchronizing the rotary movements of elements of the application rams (18);
f) wherein one or more gear elements (32, 33a, b, 34a, b) of the gear arrangement (31) is/are arranged between the rotary lever (7) and the cross-piece (17), this/these gear element(s) being in the form of gearwheels that mesh with one another;
**characterised in that**
g) between the rotary lever (7) and the cross-piece (17) at least one, two or more bearing blocks (16a, b) is/are formed, and at least one of the gear elements engages in a recess (35) of the bearing block (16), and
h) on the bearing block element (16) a centring and bearing attachment (27) is formed, on which at least one of the gearwheels (33) is formed and can rotate.

2. Application device according to Claim 1, **characterised in that** the entire gear arrangement (31) is arranged between the rotary lever (7) and the cross-piece (17).

3. Application device according to Claims 1 or 2, **characterised in that** the gearwheels (32; 33a, b; 34a, b) have a central drive output gearwheel (32) of the adjusting device (11) and drive input gearwheels (34a, b) for threaded sleeves (19a, b) or threaded bars (20a, b) of the pressure ram.

4. Application device according to Claim 3, **characterised in that** the gearwheels (32; 33a, b; 34a, b) further comprise gearwheels (33) connected between the drive output gearwheel (32) and the drive input gearwheels (34a, b) for the threaded sleeves (19a, b) or the threaded bars (20a, b).

5. Application device according to any of the preceding claims, **characterised in that** the at least one bearing block element (16a, b) is made separately from the cross-piece (17).

6. Application device according to any of the preceding claims, **characterised in that** on their side facing toward the rotary lever (7) the bearing blocks (16a, b) have a preferably partially cylindrical recess (25) in which the pivot bearing (13, 15), in particular in the form of a roller bearing or a slide bearing, engages.

7. Application device according to Claim 6, **characterised in that** further, the eccentric attachment (12) of the rotary lever (17) or at least one supporting pin (14) engages in the recess (25).

8. Application device according to any of the preceding claims, **characterised in that** the at least one bearing block element (16) and the cross-piece engage in one another with interlock.

9. Disc brake with an application device according to one or more of the preceding claims.

## Revendications

1. Dispositif d'application d'un frein à disque ayant un étrier de frein, notamment dispositif d'application suivant l'une des revendications précédentes, qui a au moins ce qui suit :
a) un levier (7) tournant, ayant un ou plusieurs segments (12a, b) d'excentrique;
b) une traverse (12), sur laquelle le levier (7) tournant agit, de préférence par au moins un élément intermédiaire, et
c) au moins deux poinçons (18a, b) d'application, montés ou constitués sur la traverse (17);
d) un dispositif (11) de rattrapage pour compenser de l'usure de garniture et de disque;
e) un train (31) de transmission pour transmettre les mouvements de rotation du dispositif (10) de rattrapage à des éléments de transmission des poinçons (18) d'application et/ou pour synchroniser les mouvements de rotation d'éléments des poinçons (18) d'application;
f) dans lequel au moins un ou plusieurs éléments (32, 33a, b, 34a, b) de transmission du train (31) de transmission est/sont montés entre le levier (7) tournant et la traverse (17), ce ou ces éléments de transmission étant constitués sous la forme de roues dentées engrènant entre elles,
**caractérisé en ce que**
g) entre le levier (7) tournant et la traverse (17) est/sont constitués au moins un, deux ou plusieurs paliers supports (16a, b) et **en ce qu'**au moins l'un des éléments de transmission pénètre dans un creux (35) du palier support (16) et
h) sur l'élément (16) de palier support est constitué un tourillon (27) de centrage et de palier, sur lequel est montée tournante au moins l'une des roues (33) dentées.

2. Dispositif d'application suivant la revendication 1, **caractérisé en ce que** tout le train (31) de transmission est disposé entre le levier (7) tournant et la traverse (17) .

3. Dispositif d'application suivant la revendication 1 ou 2, **caractérisé en ce que** les roues (32; 33a, b; 34a, b) dentées comprennent une roue (32) dentée médiane menée du dispositif (11) de rattrapage et des roues (34a, b) dentées menantes pour des manchons (19a, b) filetés ou des poinçons (20a, b) filetés des poinçons de poussée.

4. Dispositif d'application suivant la revendication 3, **caractérisé en ce que** les roues (32; 33a, b; 34a, b) dentées comprennent, en outre, entre la roue (32) dentée menée et les roues (34a, b) dentées menantes, des roues (33) dentées pour les manchons (19a, b) filetés ou les poinçons (20a, b) filetés.

5. Dispositif d'application suivant l'une des revendications précédentes, **caractérisé en ce qu'**au moins un élément (16a, b) de palier support est constitué de manière distincte de la traverse (17).

6. Dispositif d'application suivant l'une des revendications précédentes, **caractérisé en ce que** les paliers supports (16a, b) ont, du côté tourné vers le levier (7) tournant, un creux (25), de préférence cylindrique en partie, dans lequel pénètre le palier (13, 15) pivotant, constitué notamment sous la forme d'un palier à roulement ou d'un palier lisse.

7. Dispositif d'application suivant la revendication 6, **caractérisé en ce que**, dans le creux (25), pénètre, en outre, le tourillon (12) d'excentrique du levier (17) tournant ou au moins une broche (14) d'appui.

8. Dispositif d'application suivant l'une des revendications précédentes, **caractérisé en ce que** le au moins un élément (16) de palier support et les traverses s'interpénétrent à complémentarité de forme.

9. Frein à disque ayant un dispositif d'application suivant une ou plusieurs des revendications précédentes.
